# EUROPÄISCHE PATENTANMELDUNG

(11) **EP 4 376 276 A1**
(43) Veröffentlichungstag der Anmeldung: **29.05.2024**
(21) Anmeldenummer: 23208950.8
(22) Anmeldetag: 10.11.2023
(51) Int. Cl.: H02K 21/22, H02K 11/33, B60K 7/00, H02K 29/08, H02K 1/14

(54) **ELEKTROMOTOR FÜR EIN FAHRZEUGRAD**

(30) Priorität: 25.11.2022 DE 102022131243; 08.02.2023 DE 102023102998
(71) Anmelder: Bühler Motor GmbH, 90459 Nürnberg (DE)
(72) Erfinder: Guttenberger, Richard, 91171 Greding (DE); AVDUSINOVIC, Toni, 90473 Nürnberg (DE)

(57) **Zusammenfassung**

Elektromotor für ein Fahrzeugrad, insbesondere Radnabenmotor, umfassend
- einen Stator (2) mit einem Statorblechpaket (3), aufweisend einen Statorkranz (4) mit radial angeordneten Statorzähnen (5) für eine elektrische Wicklung (6),
- einen Statorträger (7), wobei der Stator (2) auf dem Statorträger (7) angeordnet ist und wobei der Statorträger (7) eine Nabe (8) aufweist, durch die eine Welle (9) aufgenommen wird,
- einen Rotor (10), der aus einer Mehrzahl von Permanentmagneten (12) ausgebildet ist, die von einem Fluxring (11) umfasst sind, wobei der Fluxring (11) innerhalb einer Felge (13) eines Fahrzeugs umfasst ist,
- mindestens zwei Abdeckungen (14a, 14b), die den Elektromotor (1) verschließen, wobei an den axialen Stirnseiten des Statorblechpakets (3) mindestens ein Isolierring (15) angeordnet ist, wobei der mindestens eine Isolierring (15) eine radiale Auskragung (16) aufweist, die das Statorblechpaket (3) und den Statorträger (7) umgreift.

## Beschreibung

Die Erfindung betrifft einen Elektromotor für ein Fahrzeugrad gemäß Anspruch 1.

Es ist bekannt, Elektromotoren in oder an Rädern oder Reifen von Fahrzeugen vorzusehen, um diese direkt anzutreiben. Dies hat den Vorteil einer platzsparenden Unterbringung im oder am Rad und erspart einen komplexen Antriebsstrang über Getriebe und Wellen. Die Effizienz des Antriebs steigt außerdem durch die direkte Anbindung an das Fahrzeugrad. Gattungsgemäße Elektromotoren können insbesondere in Form von Radnabenantrieben eingesetzt werden für elektrisch betriebene Fahrzeuge, beispielsweise Elektroscooter oder Elektrofahrräder. Diese kombinieren hohe Mobilität, insbesondere im Stadtverkehr, mit keinerlei CO₂ Emissionen bei der Fortbewegung.

Üblicherweise ist bei derartigen Elektromotoren ein Stator vorgesehen, der innerhalb einer Felge auf einer Welle befestigt ist, die mit dem Fahrzeug bzw. dem Fahrzeugrad in Verbindung steht. Meist ist dies das Hinterrad des Fahrzeugs. Der Stator kann von einem Rotor umgeben sein, der diesen umläuft und in der Fahrzeugfelge aufgenommen sein kann. Das durch die Drehbewegung erzeugte Drehmoment durch die Wechselwirkung zwischen den beiden Magnetfeldern wird für den Antrieb des Fahrzeugrades verwendet. Ein zusätzliches Getriebe ist nicht erforderlich. Die Kommutierung zwischen Stator und Rotor erfolgt elektronisch, wobei die (Steuerungs-) Elektronik hierfür üblicherweise im Fahrzeug untergebracht ist.

Da die gesamte Motoranordnung innerhalb eines Fahrzeugrades untergebracht wird, stellt sich die Aufgabe, den Elektromotor möglichst kompakt mit dennoch einfachem Aufbau zu realisieren, um eine unkomplizierte Montage im Fahrzeug, bzw. im Fahrzeugrad zu gewährleisten mit Möglichkeiten zum (elektrischen) an den Rest des Fahrzeugs. Gleichzeitig muss höchstmögliche Effizienz des Antriebs bei Schutz der Komponenten vor Umwelteinflüssen gewährleistet sein.

Diese Aufgabe wird gelöst durch einen Elektromotor für ein Fahrzeugrad gemäß Anspruch 1.

Ein Elektromotor für ein Fahrzeugrad, insbesondere Radnabenmotor, umfasst
- einen Stator mit einem Statorblechpaket, aufweisend einen Statorkranz mit radial angeordneten Statorzähnen für eine elektrische Wicklung,
- einen Statorträger, wobei der Stator auf dem Statorträger angeordnet ist und wobei der Statorträger eine Nabe aufweist, durch die eine Welle aufgenommen wird,
- einen Rotor, der aus einer Mehrzahl von Permanentmagneten ausgebildet ist, die von einem Fluxring umfasst sind, wobei der Fluxring innerhalb einer Felge eines Fahrzeugs umfasst ist,
- mindestens zwei Abdeckungen, die den Elektromotor verschließen,
wobei an den axialen Stirnseiten des Statorblechpakets mindestens ein Isolierring angeordnet ist, wobei der mindestens eine Isolierring eine radiale Auskragung aufweist, die das Statorblechpaket und den Statorträger umgreift.

Bei dem vorliegenden Motortyp handelt es sich bevorzugt um einen BLDC Motor und insbesondere um einen Motor mit (Rotor-)Außenläuferprinzip. Hierbei ist der, auf einer Nabe mit einer aufgenommenen (stehenden) Welle, fest montierte Stator von einem Rotor mit Permanentmagneten umgeben, der seinerseits mit der Felge in Verbindung steht. Genauer gesagt nimmt ein Fluxring, ein Metallring mit hoher Permeabilität, den Rotor auf oder bildet eine Einheit mit diesem. Die Permanentmagnete sind bevorzugt auf den Fluxring geklebt. Der Fluxring steht seinerseits in Verbindung mit der Felge oder der Abdeckung(en), bevorzugt ist dieser angeschweißt. Denkbar sind aber auch andere mögliche kraft-, form- oder stoffschlüssige Verbindungen von Fluxring zu Fahrzeugfelge.

Der Statorträger umfasst den Stator, der aus einem Stanzpaket gebildet ist und über am Statorkranz radial angeordneten Statorzähnen eine elektrische Wicklung aufnimmt. Der generelle Aufbau des Stators ist aus dem Stand der Technik wohlbekannt und bedarf keiner tiefgehenden Erläuterung. Der Statorträger kann aus Metall wie etwa Stahl oder Aluminium gebildet sein und gewährleistet eine stabile und widerstandsfähige Aufnahme des Stators, der auch bei Bewegung des Fahrzeugsrades den Stator in Position hält. Die Welle, die durch die Nabe des Statorträgers aufgenommen wird, ist eine feststehende Welle, rotiert im Vergleich zu einer Achse zwar nicht, überträgt aber dennoch ein Drehmoment von Stator zu Fahrzeugaufnahme. Der Stator ist feststehend und wird beschrieben vom Rotor umlaufen. Zwischen den radial angeordneten Statorzähnen ist eine geeignete Wickelfläche A1 ausgebildet, die das Bewickeln der einzelnen Statorzähne ermöglicht. Eine Statorzahnfläche A2 definiert die Größe des Statorzahnes in seiner Länge und Breite. Eine beispielhafte Bewicklung der Statorzähne ist bei einem Flächenverhältnis der Wickelfläche A1 zur Statorzahnfläche A2 in dem Bereich von 0,5 bis 1,1 gegeben.

Die Abdeckungen (auch: Lagerschilde) schützen den Elektromotor vor Umwelteinflüssen und gewährleisten gleichzeitig eine suffiziente Kühlung oder Abwärmung. Gleichzeitig können diese vorteilhaft dazu vorgesehen sein, die Kräfte der Felge (über Lager) auf die Welle zu übertragen. Die Abdeckungen können aus verschiedensten Materialen, Metallen oder Kunststoffen hergestellt sein, die im Fahrzeugbau bekannt und üblich sind. Die Abdeckungen sind jeweils bevorzugt mehrteilig ausgebildet, insbesondere aus zwei separaten Teilen bzw. Abdeckungen gebildet. Prinzipiell ist dennoch denkbar, eine einstückige oder bei der Montage unlösbar verbundene Abdeckung (oder mehrere Abdeckungen) vorzusehen. Denkbar ist weiterhin, dass auch die Felge mehrteilig ausgeführt sein kann, falls erforderlich oder gewünscht. Die Abdeckungen können eine Bohrung für ein Auslassventil aufweisen, wenn ein schlauchloses Rad oder Rad mit Schlauch-Reifen eingesetzt ist. Meist ist diese Bohrung jedoch direkt in der Felge ausgebildet. Es kann vorgesehen sein, in mindestens einer Abdeckung einen O-Ring vorzusehen, um eine vorteilhafte Abdichtung zu erzielen. Die Abdeckungen können bevorzugt vollständig geschlossen sein. Auch kann eine Vorrichtung zur Befestigung einer Bremse, beispielsweise eine Scheiben- oder Trommelbremse an einer der Abdeckungen angebracht sein.

Bevorzugt am Übergang zwischen dem Stator und dem Statorträger ist an einer oder an beiden axialen Stirnseite(n) jeweils ein (einstückiger) Isolierring angeordnet. Dieser weist eine radiale Auskragung auf, die ein- oder beidseitig am Isolierring vorgesehen ist die den Stator, genauer gesagt das Statorblechpaket, umgreift, insbesondere daran verkrallt oder eben bzw. flächig auf diesen aufliegend befestigt wird. Denkbar ist hierbei, zwischen der Auskragung und dem Stator einen Luftspalt vorzusehen. Der Isolierring kann Nuten aufweisen, die vorteilhaft die Kühlung unterstützen.

Es handelt sich bei dem Elektromotor bevorzugt um einen Radnabenmotor, denkbar sind jedoch auch sonstige Direktantriebe, insbesondere bei sogenannten two-wheeldrive Fahrzeugen. Hierbei wird nicht nur ein Rad (bevorzugt das Hinterrad bei Zweirädern) angetrieben, sondern zwei Räder, also vorderes und hinteres Rad. Dies kann auch bei mehrspurigen Fahrzeugen mit Antrieb von 2 Hinterrädern vorgesehen sein oder alternativ bei den Vorderrädern.

Vorzugsweise findet der Elektromotor Einsatz in Fahrzeugrädern mit schlauchlosen (tubeless) Reifen. Denkbar sind aber auch Räder mit Luft- (oder anderem Gas) gefüllten Schläuchen bzw. Schlauch-Reifen.

Vorteilhaft an diesem Aufbau ist die Kompaktheit der Motoranordnung, die hierdurch problemlos innerhalb eines Fahrzeugrades untergebracht werden kann, um den Antrieb dessen zu realisieren. Eine unkomplizierte Montage wird weiterhin vorteilhaft ermöglicht. Die höchstmögliche Effizienz des Antriebs ist gewährleistet. Insbesondere durch die Anbringung der Leiterplatte und der Aufnahme der Hall-Sensoren.

Die Motoranordnung kann außerdem mehrere Passscheiben, bevorzugt drei Passscheiben umfassen, um das axiale Spiel des Stators auf der Welle gering halten zu können.

Besonders vorteilhaft ist auf dem mindestens einen Isolierring an mindestens einer axialen Stirnseite eine Leiterplatte angeordnet ist, wobei mindestens ein Hall-Sensor mit der Leiterplatte kontaktiert ist und wobei mindestens ein Statorzahn eine Aufnahme aufweist, die jeweils mit einem Hall-Sensor korrespondiert.

Die Leiterplatte ist eine übliche PCB (printed circuit board) und umfasst mehrere relevante elektronische Bauteile wie Temperatursensoren und/oder Entstörkomponenten (ESD) und/oder den oder die Hall-Sensor(en). Die Hall-Sensoren sind insbesondere in einer Aufnahme eines Statorzahns aufgenommen oder in einer Aufnahme des Isolierrings. Dies gewährleistet einen sicheren und effizienten Einsatz der Hall-Sensoren am Stator bei stabiler und verliersicherer Befestigung selbst bei größeren Erschütterungen durch das Fahrzeugrad. Insbesondere ist die Leiterplatte an einer axialen Stirnseite des Isolierrings angeordnet. Prinzipiell ist auch eine Befestigung der Leiterplatte an anderer Stelle des Stators denkbar. Es kann vorgesehen, mindestens eine weitere Leiterplatte vorzusehen, beispielsweise auf der anderen Seite des Statorträgers. Über die Leiterplatte wird die elektronische Kontaktierung zu den Hall-Sensoren und/oder Temperatursensoren des Elektromotors bevorzugt realisiert.

Gemäß einer Ausführung sind auf der Leiterplatte mindestens ein Langloch und mindestens ein Pin auf dem auf dem mindestens einen Isolierring ausgebildet zur Zentrierung, Fixierung und Ausrichtung der Leiterplatte. Dies ermöglicht eine montagefreundliche Positionierung der Leiterplatte bei gleichzeitig sicherem Halt auch nach der Montage. Als Langloch kann eine Öffnung oder Bohrung verstanden werden die zum radialen Toleranzausgleich vorgesehen ist. Mindestens ein Pin kann einstückig aus dem Isolierring gebildet oder separat aufgebracht sein und mit entsprechenden Ausnehmungen der Leiterplatte korrespondieren. Diese Art der Leiterplattenfixierung bietet den Vorteil einer einstückigen, rotationssymmetrischen Montage bei komplett bestückter Leiterplatte. Ferner erfolgt keine Belastung auf die Pins der Hall-Sensoren und Kabelanschlüsse durch Leiterplattenfixierung. Alternativ kann die Leiterplatte beispielsweise auch mittels Heißverstemmung mit dem Isolierring in Verbindung gebracht werden. Auch eine Verschraubung ist möglich. Neben dem Pin zur Fixierung kann ferner eine Schraubverbindung vorgesehen sein zwischen Leiterplatte und Isolierring und/oder Stator.

In einer alternativen Ausführung sind auf der Leiterplatte mindestens ein Langloch und mindestens ein Pin auf mindestens einem Halter ausgebildet zur Zentrierung, Fixierung und Ausrichtung der Leiterplatte. Dies ermöglicht eine montagefreundliche Positionierung der Leiterplatte bei gleichzeitig sicherem Halt auch nach der Montage. Als Langloch kann eine Öffnung oder Bohrung verstanden werden, die zum radialen Toleranzausgleich vorgesehen ist. Mindestens ein Pin kann einstückig aus dem Halter gebildet oder separat aufgebracht sein und mit entsprechenden Ausnehmungen der Leiterplatte korrespondieren. Diese Art der Leiterplattenfixierung bietet den Vorteil einer einstückigen, rotationssymmetrischen Montage bei komplett bestückter Leiterplatte. Ferner erfolgt keine Belastung auf die Pins der Hall-Sensoren und Kabelanschlüsse durch Leiterplattenfixierung. Alternativ kann die Leiterplatte beispielsweise auch mittels Heißverstemmung mit dem Halter in Verbindung gebracht werden. Auch eine Verschraubung ist möglich. Neben dem Pin zur Fixierung kann ferner eine Schraubverbindung vorgesehen sein zwischen Leiterplatte und Halter und/oder Stator. Der Halter wird aufgrund Montagefreundlichkeit am Statorträger befestigt.

Gemäß einer weiteren Ausführung ist an dem Fluxring zumindest eine der Abdeckungen befestigt. Es kann eine Abdeckung fest oder reversibel an dem Fluxring befestigt sein, jedoch auch beide Abdeckungen. Bevorzugt wird zumindest eine Abdeckung an den Fluxring geschraubt. Dies erlaubt das Vorsehen eines reparaturfreundlichen Designs, da die Schrauben im Nachhinein gelöst werden können (im Gegensatz zu einer fest verschweißten Ausführung) und der (weiterhin verschraubte) Elektromotor nicht auseinandergebaut werden muss, während die Felge im Falle einer Beschädigung getauscht werden kann. Die Verschraubung am Fluxring kann unabhängig von der Felge mit den Abdeckungen verschraubt sein. Bevorzugt sind die Bohrungen für die Verschraubung im Fluxring am Innenumfang, bzw. an der oder den axialen Stirnseite(n) oberhalb der Permanentmagneten vorgesehen.

Es kann weiter vorgesehen sein, dass zumindest eine der Abdeckungen in oder an der Felge befestigt ist. Es kann eine Abdeckung fest oder reversibel an der Felge befestigt sein, jedoch auch beide Abdeckungen. Dies ist jedoch nicht zwingend, es ist auch möglich keine der Abdeckungen in der Felge zu befestigen. Auch dies erlaubt das Vorsehen eines reparaturfreundlichen Designs, da die Schrauben im Nachhinein gelöst werden können (im Gegensatz zu einer fest verschweißten Ausführungen) und der (weiterhin verschraubte) Elektromotor nicht auseinandergebaut werden muss, während die Felge im Falle einer Beschädigung getauscht werden kann. Die Felge ist vorteilhaft separat vom Motor austauschbar, beispielsweise im Falle von Beschädigungen. Der Motor muss nicht extra zerlegt werden.

Möglich ist eine ein- oder beidseitige Verschraubung der Abdeckungen an Fluxring und/oder Felge, auch unabhängig voneinander. Denkbar sind auch andere lösbare Verbindungsarten. Die Bohrungen an den Abdeckungen für die Verschraubung sind bevorzugt am Außenumfang bzw. den axialen Stirnseiten der Abdeckungen vorgesehen. Die Felge ist vorteilhaft separat vom Motor austauschbar, beispielsweise im Falle von Beschädigungen. Der Motor muss nicht extra zerlegt werden.

Es kann vorgesehen sein, dass mindestens eine Abdeckung in radialer Richtung mit dem Rand der Felge (bündig) abschließt, die andere Abdeckung auf der gegenüberliegenden Seite jedoch eine sternförmige, wellenförmige oder ähnliche Formgebung in radialer Richtung aufweisen.

Es kann weiterhin vorgesehen sein, dass zwei Teilträger über mindestens einen Rohrstutzen zu dem Statorträger verbunden sind und die zwei Teilträger in ihrem Zentrum jeweils eine axial nach außen oder innen gerichtete Wölbung mit einer Durchgangsöffnung für die Welle aufweisen. Die nach außen gerichtete Wölbung stellt radial betrachtet eine Erhebung oder Materialanhäufung auf dem Statorträger dar. Der Statorträger kann mehrteilig gebildet sein, wobei die Einzelteile (in der Regel zwei separate Teile) mittels Rohrstutzen, jedoch auch mittels Verschraubung, Bolzen, Stifte oder Nieten miteinander verbunden werden. Denkbar sind auch stoffschlüssige Verbindungen. Insbesondere sind jedoch Nietverbindungen vorteilhaft dazu geeignet, ein- oder mehrere Bereiche des Statorträgers, bzw. dessen separate Teile miteinander zu verbinden. Bevorzugt weist die Wölbung eine nach innen oder außen gerichtete Bördelung auf. An dieser kann die Welle und/oder eine Lagerbuchse aufgestützt werden.

Vorteilhaft ist in der Durchgangsöffnung die Nabe ausgebildet ist und eine Lagerbuchse in der Durchgangsöffnung angeordnet. Die Lagerbuchse kann eingepresst, eingeklebt oder ähnlich befestigt sein. Bevorzugt ist die Lagerbuchse beidseitig verschweißt. Es können Rändel an der Welle vorgesehen sein, um eine formschlüssige Verbindung zwischen Lagerbuchse und Welle zu unterstützen bei der Verpressung. Die Welle ist eingepresst und/oder über Formschluss (z.B. Passfeder, Keilwellenverbindung) mit dem Statorträger verbunden.

Weiterhin vorteilhaft wird die elektrische Wicklung aus mindestens einen Wicklungsdraht gebildet, wobei einzelne Phasendrähte mit der elektrischen Wicklung kontaktiert und zu einer Anschlussleitung verbunden werden. Alternativ kann die elektrische Wicklung auch aus mehreren Wicklungsdrähten (Multi-Wire) gebildet sein oder aus einer Einzeldrahtwicklung. Die elektrische Wicklung kann durchgängig gewickelt sein. Die Verschaltung kann durch eine Stern-Parallel-Wicklung, Stern-Reihen-Wicklung, Dreieck-Reihen-Wicklung, oder Dreieck-Parallel-Wicklung, Dreieck-Halbparallel-Wicklung, Dreieck-Reihen-Schaltung, Dreieck-Doppelparallel-Schaltung oder einer Dreieck-Vierfachparallel-Schaltung realisiert werden. Die elektrische Wicklung ist mit einer Mehrzahl von Phasendrähten verlötet, die ihrerseits zu der Anschlussleitung verbunden werden können. Die Anschlussleitung weist Isoliertüllen auf und umfasst insbesondere die Phasendrähte innerhalb seiner Isolierleitung(en). Auf der elektrischen Wicklung kann ein oder mehrere Temperatursensor(en) aufgebracht sein.

Bevorzugt kann vorgesehen sein, dass die Welle mindestens eine Querbohrung aufweist, durch die die Anschlussleitung hindurchgeführt wird. Die Anschlussleitung führt anschließend nach außerhalb des Elektromotors. Dies erlaubt eine kompakte und sinnvolle Führung der Anschlussleitung ohne die Gefahr einer Beschädigung der Anschlussleitung oder die Notwendigkeit, zusätzlichen Bauraum für die Führung schaffen zu müssen. Es können neben der Querbohrung weitere Bohrungen vorgesehen sein, beispielsweise eine Dosierbohrung, in der Dichtungsmaterial eingebracht werden kann. Beispielsweise zur Abdichtung der Durchführung für die Anschlussleitung. Es könnte aber auch eine Dichtungstülle zusätzlich oder alternativ zur Flüssigdichtung eingesetzt werden.

In einer alternativen Ausführung wird eine Hülse auf der Welle angebracht, durch die die Anschlussleitung hindurchgeführt wird. Dies hat den Vorteil, dass die Anschlussleitung nicht durch eine Querbohrung in der Welle geführt werden muss. Weiterhin kann vorteilhaft eine einfachere Abdichtung erfolgen. Die Hülse ist zwischen dem Lager und der Welle angebracht. In der Hülse ist eine axiale Bohrung vorgesehen, durch die die Anschlussleitung in einer Gummitülle parallel zur Welle durch die Hülse hindurchgeführt wird. Das Lager ist zusammen mit der Hülse und einem Radialwellendichtring in einem Lagerschild aufgenommen.

Weiterhin bevorzugt kann vorgesehen sein, dass im Statorkranz zwischen den einzelnen Statorzähnen mindestens eine elektrische Isolierung angeordnet ist. Dies kann beispielsweise eine Kunststoff- oder Folienisolierung sein, bevorzugt jedoch eine Isolierung aus Papier.

Gemäß einer Ausführung ist mindestens ein Lager beabstandet vom Statorträger auf der Welle oder in den Abdeckungen angeordnet. Bevorzugt handelt es sich dabei um ein oder zwei Kugellager, die sich vorzugsweise ein- oder beidseitig auf der Abdeckung abstützen.

Gemäß einer Ausbildung weist der Fluxring eine Fase auf und mindestens einen O-Ring aufnimmt. Vorteilhaft ist der Nutzen für Reparaturfreundlichkeit, da die Felge vorteilhaft entfernt werden kann, um am Motor Reparaturen oder Inspektionen vornehmen zu können. Der O-Ring gewährleistet eine Abdichtung des Inneren ohne eine Flüssigdichtung.

Gemäß einer weiteren Ausführung ist der Statorträger an die axiale Länge des Statorblechpakets angepasst. Hierdurch kann der Statorträger an das jeweilige Statorblechpaket optimiert angepasst werden. Möglich ist es jedoch auch, den Statorträger an die Breite des Statorblechpakets anzupassen.

Insbesondere kann vorgesehen sein, dass das Statorblechpaket durch Stanzpaketierung einzelner Bleche oder einer durchgängigen Statorkette gebildet wird. Bei der Stanzpaketierung werden einzelne und lose (Stahl-) Bleche zu einem Blechpaket gebildet. Möglich ist jedoch auch eine durchgehende und ununterbrochene Statorkette aus fortlaufenden Blechstreifen. Dies hat den Vorteil von wenig Verschnitt bei der Herstellung.

Der Elektromotor gemäß der Erfindung kann von einem Fahrzeugrad umfasst sein. Insbesondere kann der Elektromotor in oder an der Felge verbunden sein, wobei die Felge in oder an dem Fahrzeugrad befestigt sein kann. Es ist möglich, das Hinterrad eines Zweirads mit dem Elektromotor vorzusehen oder zwei Hinterräder eines Kraftfahrzeugs. Auch ist möglich, Vorder- und Hinterrad, bzw. Vorder- und Hinterräder gleichzeitig mit dem Elektromotor vorzusehen, auch bei mehrspurigen Fahrzeugen.

Insbesondere ist das Fahrzeugrad von einem Fahrzeug umfasst, insbesondere einem Roller oder einem Fahrrad, vorzugsweise elektrisch angetrieben wie etwa e-scooter, e-roller, e-bikes, Pedelecs, Lastenräder, drei- oder vierrädige bzw. mehrspurige Fahrzeuge und eine Vielzahl dem Fachmann naheliegender Anwendungsgebiete.

Die Eigenschaften und Vorteile des Elektromotors der vorliegenden Erfindung werden im Folgenden anhand von Ausführungsbeispielen in Bezug auf die Zeichnungen genauer erläutert. Es zeigt
Fig. 1 eine beispielhafte Übersichtdarstellung eines Elektromotors gemäß einer Ausführungsform,
Fig. 2 eine Schnittdarstellung eines Elektromotors gemäß Fig. 1,
Fig. 3 eine Detaildarstellung eines Stator,
Fig. 4 eine weitere Detaildarstellung eines Stators;
Fig. 5 bis Fig. 7 je Detaildarstellungen von Ausführungsformen;
Fig. 8 eine Schnittdarstellung der Welle ohne Querbohrung mit der Hülse.

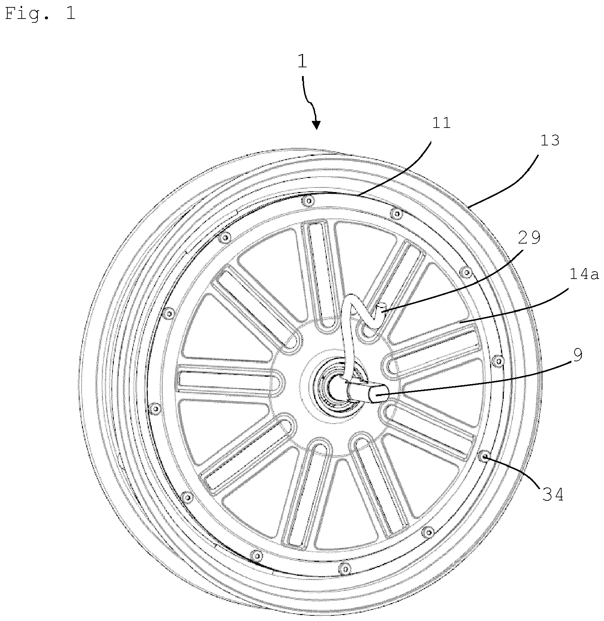

In der Fig. 1 ist ein Elektromotor (1) für ein Fahrzeug, beispielsweise ein e-scooter, gemäß einer Ausführungsform in zusammengebauter Form dargestellt. Insbesondere handelt es sich um einen Radnabenmotor. Ersichtlich ist hierbei, dass eine Abdeckung (14a) mit einem Fluxring (11) verschraubt ist über mehrere Schrauben (34). Dies ist jedoch nicht zwingend. Die Abdeckung kann auch anderweitig befestigt werden, etwa geclipst oder sogar verschweißt werden. Der Fluxring (11) ist seinerseits an eine Felge (13) des Fahrzeugs befestigt, beispielsweise verschweißt. Die Abdeckung (14a) weist eine Öffnung auf, durch die eine Welle (9) geführt ist. Die Welle (9) ihrerseits kann mit dem Rest des Fahrzeugs in Verbindung stehen, beispielsweise über eine Gabel oder Schwinge (nicht dargestellt). Die Abdeckung (14a) schließt in radialer Richtung mit dem Rand der Felge (13) bündig ab, der Abschluss kann jedoch auch eine sternförmige, wellenförmige oder ähnliche Formgebung in radialer Richtung aufweisen.

Durch die Welle (9) ist eine Anschlussleitung (29) geführt, die in elektrischer Verbindung mit dem Fahrzeug bzw. der Motoransteuerung steht.

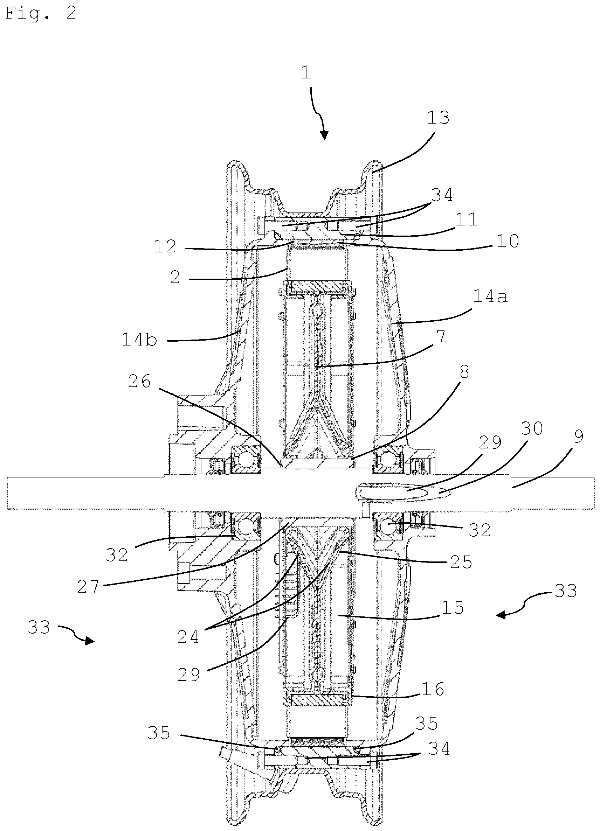

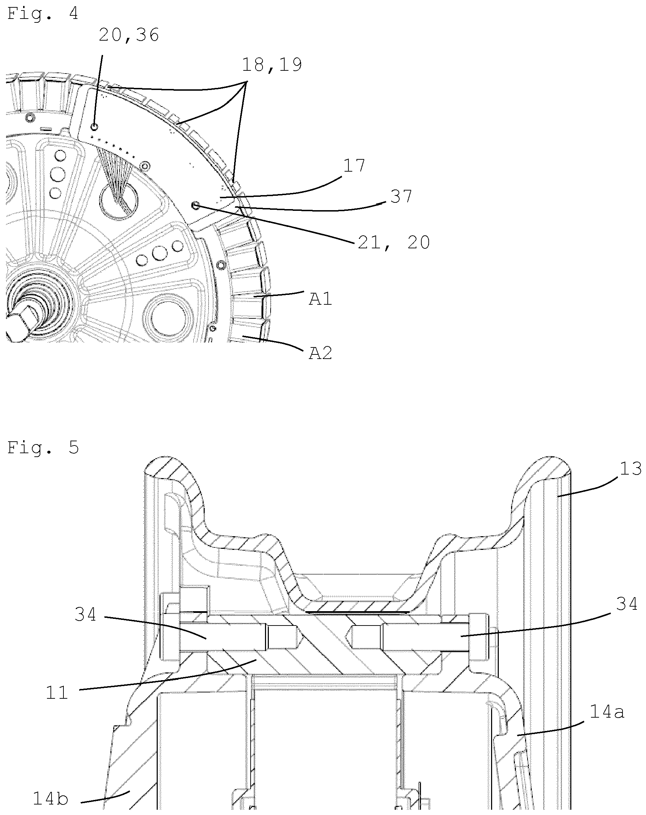

Die Fig. 2 ist eine Schnittdarstellung eines Elektromotors (1) gemäß Fig. 1, wobei alle relevanten Elemente des Elektromotors (1) ersichtlich werden. Im Ausführungsbeispiel ist der Elektromotor innerhalb der Felge (13) angebracht und umfasst einen Rotor (10) und einen Stator (2). Der Rotor (10) wird durch Permanentmagnete (12) gebildet, die von einem Fluxring (11) aufgenommen werden, beispielsweise dadurch, dass diese in bzw. an den Fluxring (11) geklebt werden. Der Fluxring (11) besteht bevorzugt aus einem metallischen, permeablen Werkstoff und kann gemäß eines Ausführungsbeispiels in die Felge (13) eingeschweißt sein Die Abdeckungen (14a, 14b) sind hier im Beispiel an den Fluxring (11) über Schrauben (34) angeschraubt. Denkbar sind aber auch weitere Möglichkeiten der Befestigung, wie in den Fig. 5 bis Fig. 7 genauer gezeigt.

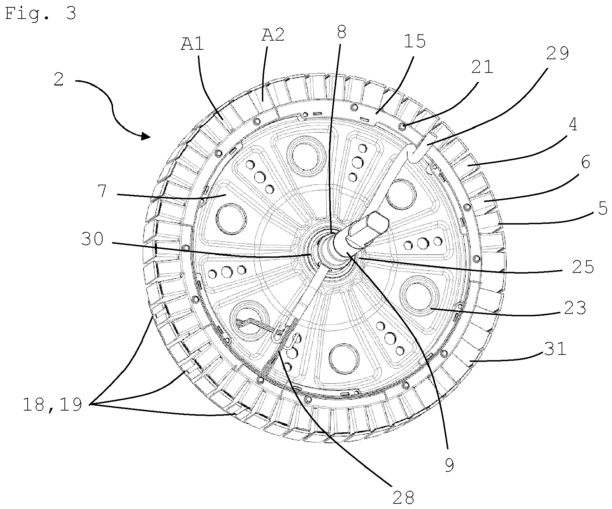

Der Stator (2) wird, wie der Fig. 3 genauer entnehmbar, gebildet aus einem Stanzblechpaket (3). Das Stanzblechpaket (3) selbst bildet einen Statorkranz (4) aus mit Statorzähnen (5) zur Aufnahme einer elektrischen Wicklung (6). Der Stator (2) wird aufgenommen von einem Statorträger (7), der vorzugsweise aus Teilträgern (22) gebildet wird. Beispielsweise werden die Teilträger (22) mittels eines Rohrstutzens (23) miteinander nach innen oder außen verbördelt. Denkbar sind aber auch Verbindungen über Nieten oder Bolzen. Der Statorträger (7) weist radiale Auskragungen (16) auf, die ein- oder beidseitig um den Stator herumreichen (an jeweils der axialen Stirnseite (33)) und diesen umgreifen oder umkrallen. Denkbar ist ein Luftspalt zwischen der radialen Auskragung (16) und dem Stanzblechpaket (2).

Die Welle (9) wird durch eine Nabe (8) einer Durchgangsöffnung (26) geführt, wobei zusätzlich eine Lagerbuchse (27) vorgesehen sein kann. Beidseitig sind im Ausführungsbeispiel Kugellager (32) vorgesehen. Die Welle (9) weist mindestens eine Querbohrung (30) auf, durch die die mit Phasendrähten (28) verbundene bzw. von diesen gebildete Anschlussleitung (29) nach außen geführt werden kann. Die Phasendrähte sind mit den jeweiligen Phasen der elektrischen Wicklungen (6) des Stators verschaltet und werden, beispielsweise innerhalb einer Isolierung zu der Anschlussleitung (29) verbunden.

Die Abdeckungen (14a, 14b) sind jeweils an den axialen Stirnseiten (33) gemäß dieses Ausführungsbeispiel mit dem Fluxring (11) verbunden, über eine Verschraubung (34). Es ist möglich, die Verschraubung (34) nachträglich zu lösen und die Abdeckungen (14a, 14b) zu entfernen. Arbeiten am Elektromotor (1) sind somit vorteilhaft möglich, zur Wartung oder Inspektion.

In der Fig. 3 ist ferner eine Wölbung (25) zu sehen, die beispielsweise durch Urformen oder einer Materialanhäufung am Statorträger (7) ausgebildet wird.

Wie den Fig. 3 und 4 ferner zu entnehmen ist, ist eine Leiterplatte (17) auf einem der Isolieringe (15) und somit auf einer axialen Stirnseite (33) vorgesehen. Die Ausrichtung und Zentrierung erfolgt über mindestens einen Pin (21) am Isolierring (15), über ein Rundloch (36). Über ein Langloch (20) und/oder eine Schraube an der Leiterplatte (17) wird die Leiterplatte (17) ferner radial gesichert. Hall-Sensoren (18) sind mit der Leiterplatte kontaktiert und innerhalb von Aufnahmen in den Statorzähnen (5) aufgenommen und dort sicher und verliersicher befestigt. Temperatursensoren sind an verschiedenen Stellen platzierbar. Die Leiterplatte (17) ist mit den Signalleitungen der Anschlussleitung (29) verbunden (Spannungsversorgung und Signale der Hall-Sensoren 18, sowie der Temperatursensoren). Zwischen den radial angeordneten Statorzähnen ist eine geeignete Wickelfläche A1 ausgebildet, die das Bewickeln der einzelnen Statorzähne ermöglicht. Eine Statorzahnfläche A2 definiert die Größe des Statorzahnes in seiner Länge und Breite. Eine beispielhafte Bewicklung der Statorzähne ist bei einem Flächenverhältnis der Wickelfläche A1 zur Statorzahnfläche A2 in dem Bereich von 0,5 bis 1,1 gegeben.

Beispielhaft sind in den Fig. 5 bis 7 mehrere Ausführungsbeispiele gezeigt, wie jeweils die Abdeckung(en) (14a, 14b) befestigt sein können.

Fig. 5 zeigt, dass beide Abdeckungen (14a, 14b) an Fluxring (11) geschraubt sind über die Verschraubung (34), zu diesem Zweck weist der Fluxring (11) eine Bohrung mit einem Gewinde auf. Auch die Abdeckungen (14a, 14b) weisen entsprechende Ausnehmungen auf.

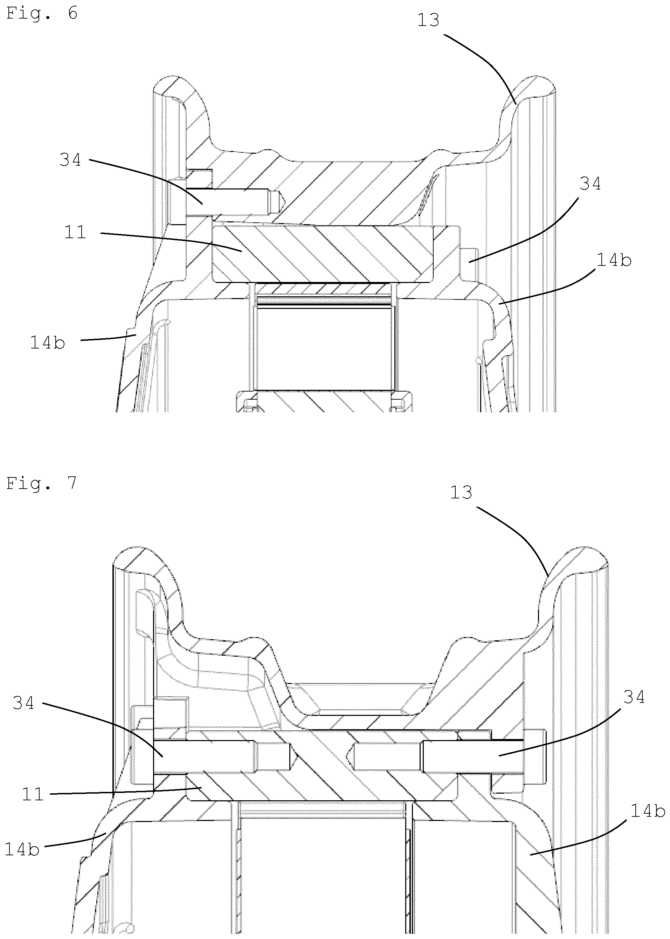

Fig. 6 offenbart eine Befestigung einer Abdeckung (14a, 14b) jeweils an der Felge (13) und am Fluxring (11). Wiederrum über jeweils eine Verschraubung (34).

Fig. 7 zeigt weiterhin eine einseitige Befestigung einer Abdeckung (14a) in oder am Fluxring (11) und zusätzlich eine Befestigung der anderen Abdeckung (14b) im Fluxring (11) und in der Felge (13). Die Verschraubung (34) kann dementsprechend länger ausgebildet sein.

Denkbar ist in allen Ausführungsformen, dass auch nur eine Seite, bzw. nur eine Abdeckung über die Verschraubung (34) verschraubt wird und gleichzeitig die andere Seite fest und/oder unlösbar mit Felge (13) und/oder Fluxring (11) verbunden wird. Zwischen Fluxring (11) und der Abdeckung kann eine Dichtung wie etwa ein O-Ring (35) vorgesehen sein, der in einer Fase des Fluxring angeordnet ist.

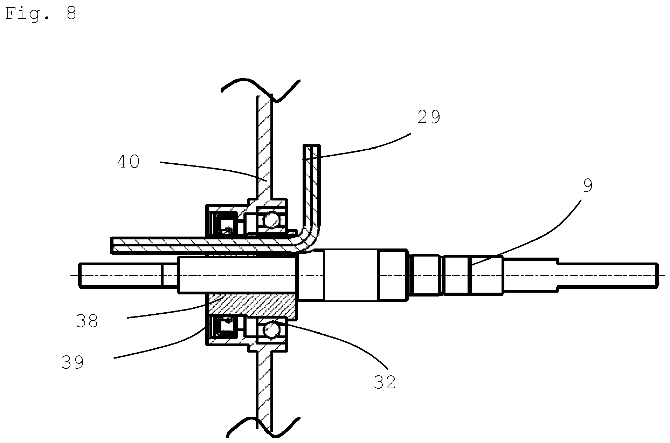

Fig. 8 zeigt eine Schnittdarstellung der Welle (9) ohne Querbohrung mit der Hülse (38), durch die die Anschlussleitung (29) hindurchgeführt wird. Die Hülse (38) ist zwischen dem Lager (32) und der Welle (9) angebracht. Das Lager (32) ist zusammen mit der Hülse (38) und einem Radialwellendichtring (39) in einem Lagerschild (40) aufgenommen. In der Hülse (38) ist eine axiale Bohrung vorgesehen, durch die die Anschlussleitung (29) in einer Gummitülle parallel zur Welle (9) durch die Hülse (38) hindurchgeführt wird. Die Welle (9) benötigt somit keine Querbohrung zur Führung der Anschlussleitung (29) ins Innere des Motors.

### Bezugszeichenliste

- 1: Elektromotor
- 2: Stator
- 3: Statorblechpaket
- 4: Statorkranz
- 5: Statorzähne
- 6: elektrische Wicklung
- 7: Statorträger
- 8: Nabe
- 9: Welle
- 10: Rotor
- 11: Fluxring
- 12: Permanentmagnete
- 13: Felge
- 14a, 14b: Abdeckung(en)
- 15: Isolierring
- 16: radiale Auskragung
- 17: Leiterplatte
- 18: Hall-Sensor
- 19: Aufnahme
- 20: Langloch
- 21: Pin
- 22: Teilträger
- 23: Rohrstutzen
- 24: Teilträger
- 25: Wölbung
- 26: Durchgangsöffnung
- 27: Lagerbuchse
- 28: Phasendrähte
- 29: Anschlussleitung
- 30: Querbohrung
- 31: Elektrische Isolierung
- 32: Lager
- 33: Axiale Stirnseite
- 34: Verschraubung
- 35: O-Ring
- 36: Rundloch
- 37: Halter
- 38: Hülse
- 39: Radialwellendichtring
- 40: Lagerschild
- A1: Wickelfläche
- A2: Statorzahnfläche

## Patentansprüche

1. Elektromotor für ein Fahrzeugrad, insbesondere Radnabenmotor, umfassend
- einen Stator (2) mit einem Statorblechpaket (3), aufweisend einen Statorkranz (4) mit radial angeordneten Statorzähnen (5) für eine elektrische Wicklung (6),
- einen Statorträger (7), wobei der Stator (2) auf dem Statorträger (7) angeordnet ist und wobei der Statorträger (7) eine Nabe (8) aufweist, durch die eine Welle (9) aufgenommen wird,
- einen Rotor (10), der aus einer Mehrzahl von Permanentmagneten (12) ausgebildet ist, die von einem Fluxring (11) umfasst sind, wobei der Fluxring (11) innerhalb einer Felge (13) eines Fahrzeugs umfasst ist,
- mindestens zwei Abdeckungen (14a, 14b), die den Elektromotor (1) verschließen, wobei an den axialen Stirnseiten des Statorblechpakets (3) mindestens ein Isolierring (15) angeordnet ist, wobei der mindestens eine Isolierring (15) eine radiale Auskragung (16) aufweist, die das Statorblechpaket (3) und den Statorträger (7) umgreift.

2. Elektromotor nach Anspruch 1, wobei auf dem mindestens einen Isolierring (15) an mindestens einer axialen Stirnseite eine Leiterplatte (17) angeordnet ist,
wobei mindestens ein Hall-Sensor (18) mit der Leiterplatte (17) kontaktiert ist und
wobei mindestens ein Statorzahn (5) eine Aufnahme (19) aufweist, die jeweils mit einem Hall-Sensor (18) korrespondiert.

3. Elektromotor nach Anspruch 2, wobei auf der Leiterplatte (17) mindestens ein Langloch (20) und mindestens ein Pin (21) auf dem mindestens einen Isolierring (15) ausgebildet sind zur Zentrierung, Fixierung und Ausrichtung der Leiterplatte (17).

4. Elektromotor nach einem der vorherigen Ansprüche, wobei auf der Leiterplatte (17) mindestens ein Langloch (20) und mindestens ein Pin (21) auf mindestens einem Halter (37) ausgebildet sind zur Zentrierung, Fixierung und Ausrichtung der Leiterplatte (17).

5. Elektromotor nach Anspruch 1 oder 2, wobei an dem Fluxring (11) zumindest eine der Abdeckungen (14a, 14b) befestigt ist.

6. Elektromotor nach einem der vorherigen Ansprüche, wobei zumindest eine der Abdeckungen (14a, 14b) in oder an der Felge (13) befestigt ist.

7. Elektromotor nach einem der vorherigen Ansprüche, wobei zwei Teilträger (22) über mindestens einen Rohrstutzen (23) zu dem Statorträger (6) verbunden sind und wobei die zwei Teilträger (24) in ihrem Zentrum jeweils eine axial nach außen gerichtete Wölbung (25) mit einer Durchgangsöffnung (26) für die Welle (9) aufweisen und/oder wobei die Wölbung (25) eine nach innen oder außen gerichtete Bördelung aufweist.

8. Elektromotor nach einem der Ansprüche 1 bis 5, wobei zwei Teilträger (24) über mindestens eine Niete zu dem Statorträger (7) verbunden sind und wobei die zwei Teilträger (24) in ihrem Zentrum jeweils eine axial nach außen gerichtete Wölbung (25) mit einer Durchgangsöffnung (26) für die Welle (9) aufweisen.

9. Elektromotor nach Anspruch 5 oder 6, wobei in der Durchgangsöffnung (26) die Nabe (8) ausgebildet ist und eine Lagerbuchse (27) in der Durchgangsöffnung (26) angeordnet ist.

10. Elektromotor nach einem der vorherigen Ansprüche, wobei die elektrische Wicklung (6) aus mindestens einen Wicklungsdraht gebildet wird, wobei einzelne Phasendrähte (28) mit der elektrischen Wicklung (6) kontaktiert und zu einer Anschlussleitung (29) verbunden werden.

11. Elektromotor nach einem der vorherigen Ansprüche, wobei die Welle (9) eine Querbohrung (30) aufweist, durch die die Anschlussleitung (29) hindurchgeführt wird.

12. Elektromotor nach einem der vorherigen Ansprüche, wobei eine Hülse (38) auf der Welle (9) ohne Querbohrung (30) angebracht wird und durch die die Anschlussleitung (29) hindurchgeführt wird.

13. Elektromotor nach einem der vorherigen Ansprüche, wobei im Statorkranz (4) zwischen den einzelnen Statorzähnen (5) mindestens eine elektrische Isolierung (31) angeordnet ist.

14. Elektromotor nach Anspruch 3 oder 4 oder einen der vorherigen Ansprüche, wobei der Fluxring (11) eine Fase aufweist und mindestens einen O-Ring aufnimmt.

15. Elektromotor nach einem der vorherigen Ansprüche, wobei das Statorblechpaket (3) durch Stanzpaketierung einzelner Bleche oder einer durchgängigen Statorkette gebildet wird.
